(19) Europäisches Patentamt / European Patent Office / Office européen des brevets

(11) **EP 3 578 927 B1**

(12) **EUROPEAN PATENT SPECIFICATION**

(45) Date of publication and mention
of the grant of the patent:
**26.10.2022   Bulletin 2022/43**

(21) Application number: **19189660.4**

(22) Date of filing: **25.09.2017**

(51) International Patent Classification (IPC):
**G01D 5/14** *(2006.01)*      **G01D 21/00** *(2006.01)*
**G01D 11/24** *(2006.01)*

(52) Cooperative Patent Classification (CPC):
**G01D 5/145; G01D 21/00;** G01D 11/245

(54) **DISPLACEMENT SENSOR FOR CONTACTLESS MEASUREMENT OF A RELATIVE POSITION, PRODUCTION METHOD FOR A MAGNETIC FIELD SENSOR ARRANGEMENT AND METHOD OF OPERATING THE SAME**

VERSCHIEBUNGSSENSOR ZUR KONTAKTLOSEN MESSUNG EINER RELATIVEN POSITION, DESSEN HERSTELLUNGSVERFAHREN UND VERFAHREN ZU DESSEN BETRIEB

CAPTEUR DE DÉPLACEMENT POUR LA MESURE SANS CONTACT D'UNE POSITION RELATIVE, PROCÉDÉ DE PRODUCTION DUDIT CAPTEUR ET PROCÉDÉ DE FONCTIONNEMENT DUDIT CAPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **27.09.2016   DE 102016218530**

(43) Date of publication of application:
**11.12.2019   Bulletin 2019/50**

(62) Document number(s) of the earlier application(s) in accordance with Art. 76 EPC:
**17783411.6 / 3 519 777**

(73) Proprietor: **TE Connectivity Germany GmbH
64625 Bensheim (DE)**

(72) Inventors:
• **HOFFMANN, Eric
68723 Schwetzingen (DE)**

• **SCHERNER, Simon
67346 Speyer (DE)**
• **STEEG, Oliver
68623 Lampertheim (DE)**
• **ZACHOW, Jochen
61479 Glashütten-Oberems (DE)**

(74) Representative: **Grünecker Patent- und Rechtsanwälte
PartG mbB
Leopoldstraße 4
80802 München (DE)**

(56) References cited:
**EP-A2- 2 466 269          WO-A1-03/019216
DE-A1-102013 009 862   US-A1- 2013 335 073
US-A1- 2014 297 911**

## Description

The present invention relates to a displacement sensor for contactless measurement of a relative position of a magnetic field source, which generates a magnetic field, and a magnetic field sensor arrangement with respect to each other. The present invention also further relates to a corresponding production method for producing such a magnetic field sensor arrangement and to an associated magnetic field sensor.

With the help of the displacement sensor according to the invention, in particular linear movements are to be detected and evaluated contactlessly by means of magnetic interaction between one or more permanent magnets and a magnetic sensor arrangement which is based on a magnetoresistive effect or the Hall effect. The field of application of the present invention nevertheless also comprises a relative movement along curved paths (and thus, for example, detection of an angle).

The measurement of linear movements is used, for example, for controlling machine tools in pneumatics, in automation technology and robotics as well as in the automotive sector. A contactless detection of movements has the advantage, inter alia, of being wear-free. The optical and magnetic contactless measuring methods are the most common of said contactless measuring methods. While the optical methods guarantee a very high level of accuracy by virtue of the small wavelength of the light, magnetic methods are far less sensitive to contamination and damage, in particular due to the fact that magnets and sensor components can be fully encapsulated in a non-magnetic hermetic protective material.

Various manufacturers offer displacement sensor systems in which the position of a displaceable permanent magnet is determined, e.g. with the help of a two-dimensional or three-dimensional Hall-effect sensor.

In this case, to detect the linear relative movements at a location, two magnetic field components which are perpendicular to each other are measured and their quotient is evaluated for position identification. This approach has the advantage that, in areas in which one field component assumes an extreme value and thus does not detect small displacements, the other field components respond all the more strongly such that equally high measuring accuracy is approximately high throughout the entire measuring range.

Furthermore, this principle has the advantage that it is comparatively less sensitive to a variation of the absolute magnetic field strength, since relative values between the field components are used for position detection.

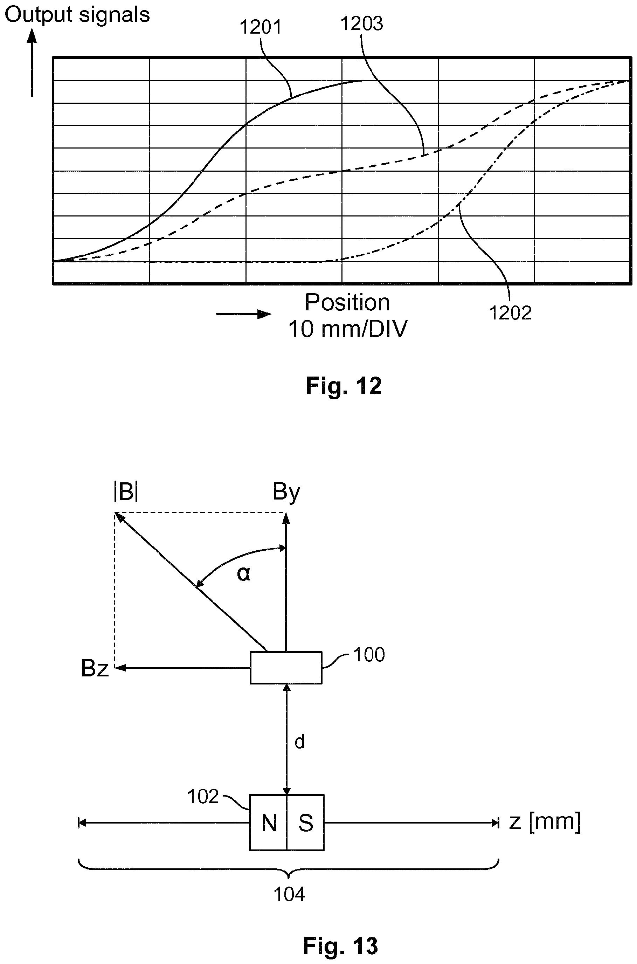

Figure 13 shows an arrangement in which, for contactlessly detecting a linear movement, a magnetic field sensor 100, in particular a Hall-effect sensor, is fixedly assembled, for example on a housing wall, and detects the magnetic field of a movable permanent magnet 102. Corresponding to the north/south polarisation along the movement direction of the permanent magnet 102, the magnetic field which runs in the movement direction is hereinafter designated magnetic field component Bz, and the component which runs transversely thereto is designated By. The entire measuring range in the z direction which is covered by the Hall-effect sensor 100 is indicated by the reference number 104.

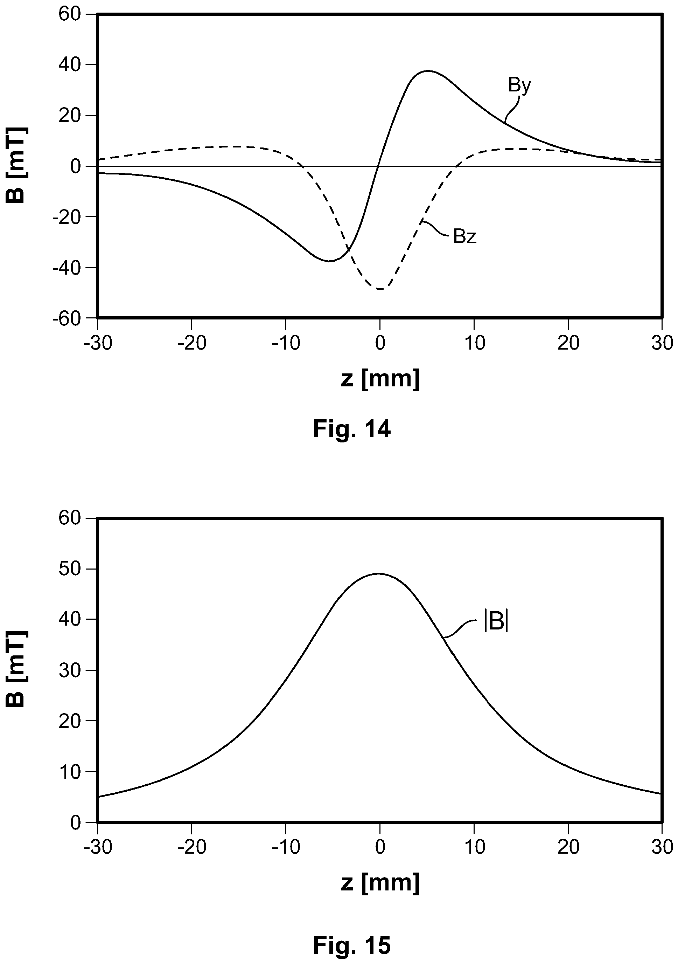

Figure 14 shows the curve of the components By and Bz of the magnetic flux density as a function of the location z of the permanent magnet 102. The zero position is the position in which the permanent magnet 102 and the sensor 100 are directly opposite each other.

The angle α, which can be calculated according to the following equation (1), is used as a measuring signal.

$$\alpha = \arctan\left(\frac{Bz}{By}\right)$$ (1)

The curve of the quantity $|\vec{B}|$ of the magnetic flux density is shown in Figure 15 as a function of the location z. The vector quantity $|\vec{B}|$ of the magnetic flux density is calculated in a known manner from the individual components By and Bz according to the following equation (2). Corresponding calculation rules apply, as known to a person skilled in the art, when using other coordinate systems and also when adding a third magnetic field component Bx.

$$|\vec{B}| = \sqrt{By^2 + Bz^2}$$ (2)

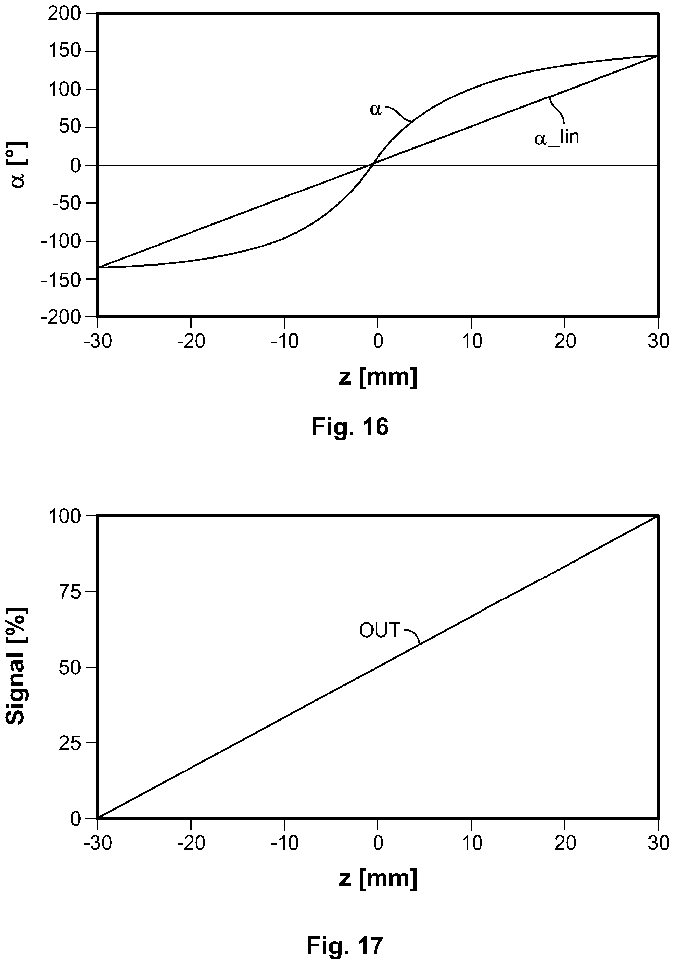

As illustrated in Figure 16, the angle α depends, up to a certain value comparatively linearly, on the position of the permanent magnet 102 with respect to the Hall-effect sensor 100. The currently measured characteristic is usually further linearised, as illustrated in Figure 16 by means of the curve α_lin. This linearised curve α_lin then forms the output characteristic of the sensor. Figure 17 shows the curve of the position signal OUT which is output by the sensor.

EP 2 466 269 A2 discloses a position sensor device and linear drive device fitted with same. The device has sensor units comprising a detection unit e.g. hall-sensor, for detecting movement components i. e. output units, and a communication interface for outputting position signals based on measuring signals of the sensor units. The sensor units are designed as sensor modules provided with electrical interface units that are variably strung together under electrical bonding to form a module strand. An electrical evaluation device is installed upstream of the communication interface for receiving the measuring signals of the sensor units. An independent claim is also included for a linear drive device comprising a position sensor device.

US 2014/297911 A1 relates to a method for coupling a first sensor to at least one second sensor, the method including a step of transmitting a first signal from the first sensor to the at least one second sensor. Furthermore, the method includes a step of providing a second signal by way of the second sensor. The second signal is provided in response to the first signal, the second signal representing a measured value of the second sensor. Furthermore, the method includes a step of outputting a third signal for a control unit by way of the first sensor. The outputting of the third signal is carried out in response to the second signal, the third signal representing at least one measured value of the first sensor.

DE 10 2013 009862 A1 discloses a sensor arrangement for position detection for a magnetic device movable along a movement path. A plurality of sensor units are arranged along the movement path, each for scanning one section of the total movement path and for providing a sensor signal in dependence on the position of the magnetic device. An evaluation unit is provided for evaluating the sensor signals of the sensor units and to provide a position signal. The evaluation unit and the sensor units are connected to a bus communication line, wherein the sensor units are designed to couple digitized sensor signals to the bus communication line and/or wherein the evaluation device and the sensor units are designed for bidirectional communication via the bus communication line.

WO 03/019216 A1 discloses a magnetic field measuring device useful for measuring a magnetic field associated with an electric current, including a bus section connectable into the path of the electric current, a first magnetoresistive (MR) bridge oriented to be sensitive to the magnetic field of a current in the bus section, a second MR bridge oriented to be substantially insensitive to the magnetic field of a current in the bus section, a biasing coil configured and positioned to apply a magnetic field to the first and second MR bridges, whereby the sensitivity of the first MR bridge can be controlled; and a signal processing device responsive to a voltage output of the second MR bridge to control the current through the biasing coil. The device exhibits good rejection of stray magnetic and electric fields, is convenient to use, and can be fabricated in a single chip, with or without associated signal processing and conditioning circuitry, using conventional IC processing techniques.

US 2013/335073 A1 relates to a single package magnetoresistive angle sensor for use in measuring rotation angle of a magnet. The magnetoresistive angle sensor comprises a pair of magnetoresistive sensor chips, wherein one of the chips is rotated by 180-degree rotation relative to the other. The magnetoresistive sensor chips are attached to a standard semiconductor package lead frame to form a single-axis push-pull full-bridge sensor.

Most commercially available 3D Hall-effect sensors can only be operated in the presence of a sufficiently strong magnetic field. If the permanent magnet is located outside the range of detection of the sensor, a sensor signal is no longer obtainable. It is therefore proposed in the German patent DE 10 2012 205 903 B4 that the magnetic field sensor which detects the position of the magnetic field source should have a plurality of magnetic field probes. Each of the magnetic field probes outputs a position signal, and this position signal is based on at least two spatial components of the magnetic flux density of the magnetic field. An external control and calculating unit is provided, which outputs a total output signal of the displacement sensor based on the plurality of position signals. Furthermore, a storage unit is provided which stores the individual position signals. The control and calculating unit decides, based on a calculated value of the magnetic flux density, which is measured at the location of the respective magnetic field probe, if a current position signal is to be output as the position signal, or if the previously stored position signal is to be output and the further calculation to be taken as a basis.

For some applications the provision of a separate control and calculating unit is, however, not practical since the overall displacement sensor would in this case become too cumbersome and prone to faults.

In particular, the problem underlying the present invention is to improve a displacement sensor for contactless position detection such that the measuring range can be substantially extended, at the same time a smaller magnet can be employed as a magnetic field source and, moreover, a compact, low-cost magnetic field sensor unit is provided.

This problem is solved by the subject-matter of the independent claims. Advantageous further developments of the present invention are the subject of the dependent claims.

The present invention is only defined by the subject-matter of the independent claims. Advantageous embodiments are covered by the dependent claims. Examples not necessarily covered by the claims are examples useful for understanding the invention.

The present invention is based on the idea of specifying a displacement sensor for contactlessly detecting a relative position of a magnetic field source, which generates a magnetic field, and a magnetic field sensor arrangement with respect to each other, wherein the magnetic field source and the magnetic field sensor arrangement are movable relative to each other. The magnetic field sensor arrangement comprises a first magnetic field sensor for generating a first position signal and at least one second magnetic field sensor for generating a second position signal, wherein each of the magnetic field sensors comprises at least one magnetic field probe for detecting a magnetic flux density of the magnetic field, an evaluation unit for evaluating an output signal of the magnetic field probe and a communication interface for emitting and receiving communication signals, and wherein the first and the second magnetic field sensor are connected to each other via a data bus for transmitting said communication signals. Hereinafter, the following terms and definitions will be used.

The contactless displacement sensor according to the invention is defined by claim 1, and comprises a magnetic field source, preferably a permanent magnet, and a magnetic field sensor arrangement cooperating therewith. The magnetic field sensor arrangement is hereinafter intended to be understood to mean an array of magnetic field sensors which communicate with each other. The magnetic field probe means the transducer element which carries out the physical conversion of the magnetic input variable into an electrical signal. According to the present invention, as well as the two-dimensional and three-dimensional Hall-effect sensors, which operate on the basis of the Hall effect, magnetoresistive (MR) measuring transformers are also possible for this purpose. The term MR sensor is a collective term for sensors which are based on different physical principles. All devices operating on MR principles have in common the fact that the electrical resistance of the sensor changes under the influence of a magnetic field. By means of skillful arrangement of the structures in the sensor, very different sensors can be constructed in order to detect, for example, a magnetic field angle, a magnetic field strength or a magnetic field gradient.

The anisotropic magnetoresistive effect (AMR) occurs in ferromagnetic materials, the resistivity of which changes with the angle between the magnetic field direction and the current direction. The change in resistance amounts to a small percentage and is useful even with weak magnetic fields. In the case of the TMR effect (tunnel magnetoresistive) the tunnel resistance changes between two ferromagnetic layers, depending on the angle of the magnetisation of the two layers. The giant magnetoresistive effect (GMR) was only discovered in 1988. The electrical resistance of two thin ferromagnetic layers, separated by a thin non-magnetic layer, changes depending on the angle of the magnetisation in the two ferromagnetic layers to each other and produces changes in resistance of up to 50%. The electrical resistance is the highest in the case of antiparallel magnetisation. The change in resistance is not dependent on the current direction. When several layers with different properties and magnetisations are stacked, the characteristics of GMR sensors are determined by their construction. This enables a targeted adaptation of the characteristics to the requirements for a particular measurement application.

The inventive connection of the magnetic field sensors via a data bus has the advantage that it can combine a number of magnetic field sensors, which can be selected in a flexible manner where applicable, to form a highly integrated magnetic field sensor arrangement, without the necessity for a separate control and calculating unit, in order thus to cover an extended measuring range. The magnetic field sensor arrangement can be adapted simply and at low cost to particular application requirements, in particular with respect to the path length which is to be detected. Due to the fact that each magnetic field sensor includes all the components required for its operation and for complying with the EMC/ESD and electrical requirements, no further components are required, so the magnetic field sensor arrangement according to the invention has no need of a printed circuit board (PCB). The magnetic field sensor arrangement according to the invention is, in comparison with known sensor platforms, more reliable and more robust, needs fewer parts, costs less to produce, and takes up less overall space.

According to a first embodiment, the first magnetic field sensor is configured as master and the at least one second magnetic field sensor is configured as slave. Up to seven second magnetic field sensors configured as slaves can be connected in series via the data bus connection, for example. All the usual formats which are conventionally employed for connecting sensors are possible for the data bus protocol. For example, this can be an SPI (serial peripheral interface), $I^2C$ (inter-integrated circuit) or SENT (single edge nibble transmission) protocol. Preferably, a data bus connection is bidirectional.

SENT (an open standard which was released by the Society of Automotive Engineers (SAE) in 2008, SAE J2716) is a relatively new serial interface which was originally provided for use in motor cars but which is also suitable for other applications. It is important to note that the SENT protocol is defined as unidirectional output protocol. Typically, sensors must output their data in security-related areas of application, i.e. at a constant data rate. A bidirectional communication with acknowledgement packets and repeated packets could result in interruptions. For communicating between the magnetic field sensor configured as master and the magnetic field sensor(s) configured as slave, a second bidirectional interface is thus required for the communication.

According to the present invention, a plurality of second magnetic field sensors can be provided, which are arranged in series along a displacement path of the magnetic field source. The displacement sensor according to the invention can thus be adapted in a flexible manner to a great variety of spatial conditions. Not only linear movements can be detected over relatively long, straight distances, but also rotation movements wherein the magnetic field sensors are arranged along a radius around the rotation axis of a moving part.

As well as a master-slave architecture, the present invention also comprises a multimaster architecture. The advantage of the latter architecture is that a mutual signal evaluation can take place and thus a redundant output signal can be generated. The reliability of the displacement sensor is thus substantially increased, for example for security-related areas of application. In particular, it can be provided for the second magnetic field sensor to be operated to output a complementary output signal which is redundant in relation to said output signal.

The advantages according to the invention can be achieved particularly easily if the magnetic field source comprises at least one permanent magnet.

In order for an electrical output signal, which is utilisable for external components, for example the central control of a motor vehicle, to be able to be output, the first magnetic field sensor advantageously has an output driver unit which can be operated to output an output signal based on the first and the at least one second position signal.

In order to connect the magnetic field sensors to each other in a mechanically robust and easily produced way, according to the present invention the first magnetic field sensor and the at least one second magnetic field sensor are connected to each other via a leadframe. A leadframe means an electrically conductive, planar or three-dimensional conductor track structure which is preferably produced from metal by stamping and bending.

A housing which encloses all the magnetic field sensors is provided for protecting the magnetic field sensor arrangement from outside influences. This housing can in particular be hermetically sealed, in order to prevent dirt, gases and moisture from entering.

The present invention further relates to a method as defined in claim 9 for producing a magnetic field sensor arrangement for a displacement sensor for contactlessly detecting a relative position of a magnetic field source which generates a magnetic field, and the magnetic field sensor arrangement with respect to each other, wherein the magnetic field source and the magnetic field sensor arrangement are movable relative to each other, wherein the method comprises the following steps:

producing a leadframe;
injection moulding a plastic around the leadframe to form a carrier;
assembling a first magnetic field sensor and at least one second magnetic field sensor such that the leadframe produces a terminal to the outside and a bidirectional data bus connection between the first and the second magnetic field sensor;
enclosing the magnetic field sensor arrangement in a housing.

With the help of the production method according to the invention, magnetic field sensor units which have no need at all of a PCB, are robust and precise, and can be adapted to changes in the requirements of the measuring range with relatively low technical effort can be produced simply and at low cost.

The use of leadframes enables a geometrically precise alignment of the magnetic field sensors with respect to each other and with respect to outer housing structures (e.g. fixing means) which determine the position accuracy during later installation in the application environment. All electrical connections inside the magnetic field sensor arrangement can be formed by thermally and mechanically extremely stable contacting methods such as welding or solder connections. According to an advantageous embodiment of the present invention, fully housed magnetic field sensor elements can be assembled on the carrier formed by the moulded-in leadframe. This has the advantage that magnetic field sensors which are prefabricated and where applicable available on the market as individual sensors can be employed without further modifications. Of course, magnetic field sensor components which are not housed can also be assembled on the moulded-in leadframe.

Finally, the production method according to the invention also has the advantage that the entire arrangement can be hermetically sealed and thus protected from the ingress of dirty gases and liquids.

The present invention further relates to a method as defined in claim 11 for operating the displacement sensor according to the invention, which comprises the following steps:

generating the first and at least one second position signal by means of the first and at least one second magnetic field sensor depending on a position of the magnetic field source with respect to the magnetic field sensor arrangement;
transmitting the at least one second position signal via the bidirectional data bus to the first magnetic field sensor, wherein the first magnetic field sensor is configured as master;
calculating an output signal based on the first and the second position signal by means of the first magnetic field sensor;
outputting the output signal by means of the first magnetic field sensor.

Because the first magnetic field sensor has the intelligence to be able to carry out signal processing for its own magnetic field probe and for the magnetic field probe of at least one further magnetic field sensor, there is no need to provide an external master and the magnetic field sensor arrangement according to the invention can be universally employed as a compact unit for numerous application environments.

Secure and quick data transmission can take place on the preferably bidirectional data bus between the magnetic sensors, as already stated above, according to numerous conventional protocols. The communication can be performed according to an SPI, I2C or SENT protocol, for example.

The method according to the invention can further provide for a complementary output signal to be calculated by the second magnetic field sensor and for the complementary output signal to be output together with the actual output signal. In this way, a redundancy can be achieved.

Particularly in the case of security-related areas of application, this improves the reliability and possibility of fault detection.

In particular, if not only the first magnetic field sensor but also the second magnetic field sensor is configured as master, both magnetic field sensors can carry out a measurement and transmit their measuring signals to the respectively other magnetic field sensor. Both magnetic field sensors then calculate a position signal by combining both measuring signals. The first magnetic field sensor supplies the output signal while the second magnetic field sensor generates the output signal which is complementary thereto.

Finally, an example useful for understanding the invention relates to a magnetic field sensor for a displacement sensor according to the invention. The magnetic field sensor has at least one magnetic field probe for detecting a magnetic flux density of the magnetic field and an evaluation unit for evaluating an output signal of the magnetic field probe. According to the invention, at least one preferably bidirectional communication interface for emitting and receiving communication signals via a data bus connection is provided. This kind of magnetic field sensor can be configured flexibly, both as master and as slave. Additional external control and calculating units are superfluous. Of course, the magnetic field sensor according to the invention can also be operated as an individual sensor in that it is an external data bus architecture and in this case supplies the signals adapted to the respective communication protocol.

Advantageously, such a magnetic field sensor can either use the Hall effect or one of the magnetoresistive effects described above as the underlying physical principle.

An output terminal which outputs an output signal is further advantageously provided for coupling the magnetic field sensor to external components. In particular, the output signal is a pulse width modulated (PWM), analogue or binary coded signal which is generated in response to the detected magnetic flux density of the magnetic field. The magnetic field sensor according to the invention can thus be adapted to the respective application environment.

To better understand the present invention, it will now be explained in greater detail using the exemplary embodiments depicted in the following figures. Identical parts are here provided with identical reference numbers and identical component names. Furthermore, individual features or combinations of features from the shown and described embodiments taken separately represent independent inventive solutions or solutions according to the invention.

In the drawings:

Figure 1    shows a schematic diagram of a displacement sensor according to a first embodiment of the present invention;

Figure 2    shows a schematic diagram of a magnetic field sensor from Figure 1;

Figure 3    shows a schematic diagram of a magnetic field sensor arrangement according to a second embodiment;

Figure 4    shows a schematic diagram of a magnetic field sensor arrangement according to a further embodiment;

Figure 5    shows a schematic diagram of a magnetic field sensor arrangement according to a further embodiment;

Figure 6    shows a perspective illustration of a magnetic field sensor arrangement with two magnetic field sensors;

Figure 7    shows a perspective illustration of a leadframe for the magnetic field sensor arrangement from Fig. 6;

Figure 8    shows a perspective illustration of the leadframe from Fig. 7 after plastic has been injection moulded around it,

Figure 9    shows a perspective illustration of the moulded-in leadframe from Fig. 8 after the assembling of the magnetic field sensors;

Figure 10    shows a perspective illustration of the fully assembled magnetic field arrangement;

Figure 11    shows a schematic flowchart of the measurement procedure in the case of a multimaster architecture;

Figure 12    shows the curve of the measuring signals for a magnetic field sensor arrangement with two magnetic field sensors which are based on the Hall probe principle;

Figure 13    shows a schematic illustration of a 3D Hall probe;

Figure 14    shows the curve of the generated magnetic field components as a function of the position of the permanent magnet with respect to an individual Hall probe;

Figure 15    shows the curve of the value of the magnetic flux, calculated from the generated magnetic field components, at the location of the Hall probe from Fig. 13;

Figure 16    shows the curve of the angle $\alpha$ calculated from the generated magnetic field components and the curve of a linearised angle;

**Figure 17** shows the curve of the output signal of the Hall probe from Fig. 13.

The invention will be explained in greater detail hereinafter with reference to the figures.

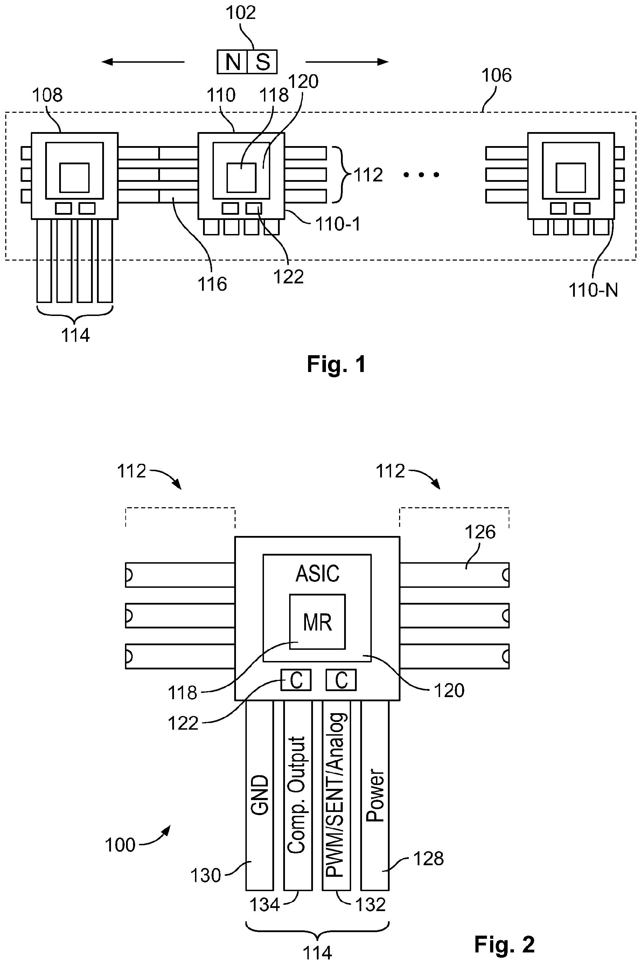

In principle, a displacement sensor arrangement according to the present invention functions as explained with respect to Fig. 13: a magnetic field sensor 100 is fixedly assembled, while a permanent magnet 102 is mounted to be movable linearly (or along a curved path) with respect to the magnetic field sensor 100. The permanent magnet 102 is polarised for example such that its north/south axis is oriented parallel to the movement direction. The principles of the present invention are generally also applicable to arrangements in which the permanent magnet 102 is polarised such that its north/south axis runs transversely to the movement direction. The permanent magnet 102 can be displaced from the zero position shown in Fig. 1 in two directions by a travel distance 104 defined by the respective application.

In the event that it is formed by a Hall-effect sensor, the magnetic field sensor 100 detects at least two orthogonal magnetic field components - one which runs along the line of movement and one which runs transversely thereto (see Fig. 14). The vector addition of the two components gives the value of the magnetic field $|\vec{B}|$ , as illustrated in Fig. 15. The angle $\alpha$ is defined as the angle between the overall magnetic field vector $|\vec{B}|$ and the perpendicular to the movement direction.

As already mentioned, the angle $\alpha$ is calculated from the magnetic field components, in or transversely to the movement direction according to equation (1):

$$\alpha = \arctan\left(\frac{Bz}{By}\right)$$

(1)

The calculated angle $\alpha$ is linearised in order to be available as an output signal OUT that is proportional to distance, as illustrated in Figures 16 and 17.

Of course, the principles according to the invention can also be applied to other magnetic field sources, e.g. electromagnets, and to magnetic field sensors such as magnetoresistive sensors or inductive sensors.

In the present description, on the one hand the values of the magnetic field in the movement direction Bz, and on the other hand the values of the magnetic field transversely to the movement direction By are used as magnetic field components which, are measured in dependence on the position of the permanent magnet 102 in the magnetic field sensor, in this case a Hall-effect sensor 100. Of course, the Bx values which run orthogonally to By can also be used for the calculation.

In order to be able to cover an extended measuring range with the help of a compact and autonomous magnetic field sensor arrangement 106, it is provided, according to a first embodiment of the present invention, for a first magnetic field sensor 108 configured as master (hereinafter designated simply as "master") and one or more second magnetic field sensors 110 configured as slaves (hereinafter designated simply as "slave") to be connected to each other via a data bus 112. If a plurality of second magnetic field sensors 110-1 to 110-N are provided, these can be connected to each other in series, as illustrated in Fig. 1. According to an exemplary embodiment, seven magnetic field sensors 110-1 to 110-7 configured as slaves are thus connected to each other in a cascade, wherein a signal path is provided both from the master to the slaves and from the slaves to the master.

As is schematically indicated in Fig. 1, the magnetic field sensors 108, 110 are connected to each other directly via a leadframe which forms individual lines 116 of the data bus 112. Therefore, a PCB is no longer required and the magnetic field sensor arrangement 106 is particularly robust and can be extensively miniaturised.

With each individual magnetic field sensor 108, 110, a measuring range of approximately 30 mm can be covered. By means of cascading a plurality of individual sensors, a correspondingly greater detectable measuring range can be achieved. For example, when using a first magnetic field sensor 108 and seven second magnetic field sensors 110-1 to 110-7, a maximum measuring range of approximately 240 mm can be covered.

The magnetic field sensor arrangement 106 has an input/output interface 114 which serves to link the magnetic field sensor arrangement to external components (not illustrated in the figures). As is also made clearer by Figure 2, the input/output interface 114 serves, on the one hand, to connect the magnetic field sensor arrangement 106 to ground and an external power supply and, on the other hand, to output an output signal which reflects the position of the magnet 102. The output signal here, as is also usual in the case of conventional displacement sensors, can be either an analogue signal, a PWM signal or a binary coded signal (according to the SENT protocol, for example). Power is supplied for example by a direct current voltage of 4 V to 16 V.

It is clear to the person skilled in the art that the measurement data can be transmitted to the outside, of course also with the help of wireless technology, e.g. a radio connection. The energy which is required for operation of the magnetic field sensors can also be supplied contactlessly (e.g. by inductive coupling or energy harvesting).

According to the embodiment shown in Fig. 1, all magnetic field sensors 108, 110 are constructed identically, wherein the first magnetic field sensor 108 is configured as master and the second magnetic field sensors 110 as slaves. Each magnetic field sensor has a magnetic field probe 118 which detects the magnetic field and is arranged on an application specific integrated circuit (ASIC) 120. In addition, the ASIC 120 is equipped with further electronic circuits, for example a control unit, a communication unit, memory units and where applicable voltage converters and stabilising circuits. Discrete components such as capacitors 122 can also be provided.

In the particular embodiment of Fig. 1, three connecting lines 116 are provided which form the data bus 112. However, the number of connecting lines 116 can of course be adapted to the particular requirements of the bus format and bus protocol such that more or fewer lines 116 are also possible. The magnetic field sensors are according to the invention connected with each other in series in a cascade such that the data which is transmitted over the bus is looped through all bus participants respectively. Nevertheless, by providing lines 116 which run correspondingly parallel at the leadframe, a parallel or a combined serial/parallel bus 112 connecting the magnetic field sensors 110-1 to 110-N configured as slaves to each other and to the magnetic field sensor 108 configured as master is also achievable. Examples of possible data bus protocols are, as mentioned, the SPI (serial peripheral interface), I2C (inter-integrated circuit) or SENT (single edge nibble transmission) protocols.

As already stated above, the magnetic field probe 118 can be based on any conventional physical principle which is suitable for detecting the magnetic field. A Hall-effect sensor or a magnetoresistive (MR) sensor, e.g. an anisotropic magnetoresistive (AMR) sensor, a tunnel magnetoresistive (TMR) or a giant magnetoresistive (GMR) sensor can for example advantageously be employed as a magnetic field probe 118.

In the event that GMR technology is used, there is no need for magnets of rare earths since a high degree of accuracy can already be guaranteed for a standard ferromagnet when using a GMR probe.

As already mentioned, the master and the slaves can be formed by identical magnetic field sensors 100. The configuration as master or slave takes place automatically according to the invention, in that during a configuration step it is determined whether the respective connecting lines 116 are unconnected or connected up. If, for example corresponding to the arrangement in Fig. 1 for a magnetic field sensor, it is determined that the terminals on its left side as seen from above are unconnected terminals 124, it is established that it is intended to be a master. By contrast, if the terminals located on the left side represent connecting lines 116, the corresponding magnetic field sensor is configured as slave.

During an automatic addressing routine, the address "0x0" can be assigned to the master. The further magnetic field sensors then receive the address of the adjacent magnetic field sensor + "0x1".

The master comprises a signal processing unit which is able to process the signals of all the magnetic field probes of the array, i.e. the probes in the slaves and its own probe, and generate an output signal therefrom which reflects the position of the permanent magnet. The communication between the master 108 and the slaves 110 takes place via the communication bus 112 connected to the ICs. The slaves 110 must have at least one magnetic field probe 118, means for analogue to digital conversion, and a digital communication interface for internal communication. The master 108, along with the magnetic field probe 118, the means for analogue to digital conversion, and the digital communication interface, also contains a signal processing unit for combining all sensor signals and a robust output driver for outputting the calculated output signal to an external control unit. Furthermore, the master 108 comprises means for connecting the magnetic field sensor arrangement 106 to an external power supply unit.

The magnetic field sensor arrangement 106 according to the invention needs only the magnetic field sensors 108, 110 and does not require any evaluation units. External means for overvoltage protection, for signal stabilisation, for ensuring the electromagnetic compatibility (EMC) or for protecting against electrostatic discharge (ESD) are not necessary either, since the magnetic field sensors 108, 110 according to the invention include all the required components.

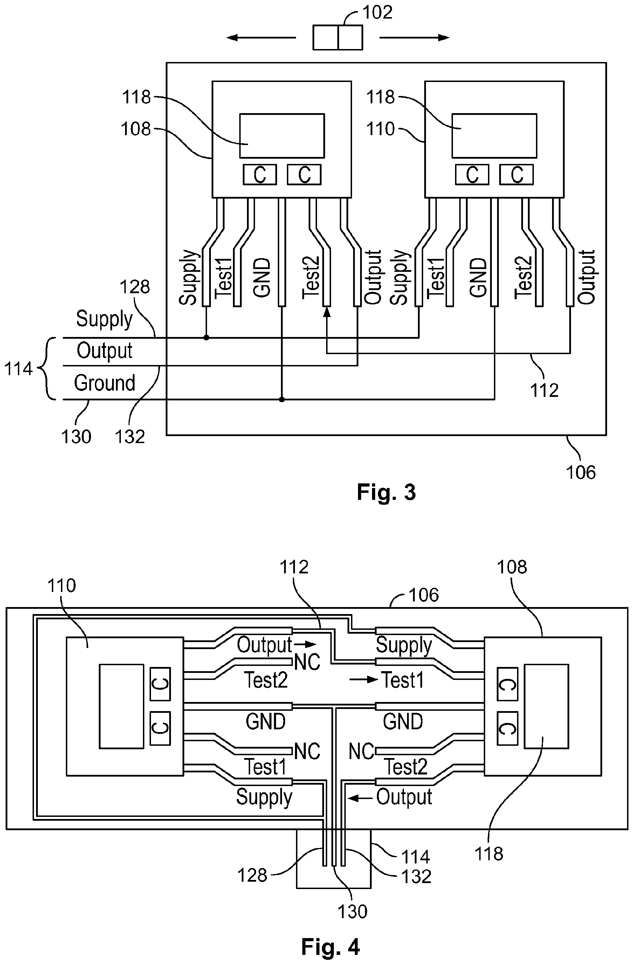

Although the principles according to the invention can also be implemented using commercial magnetic field sensors (see the embodiments in Figures 3 to 10), the invention proposes a magnetic field sensor 100 which is particularly suitable for arrangement in an array, illustrated in Figure 2.

The magnetic field sensor 100 has an ASIC 120 which preferably includes a magnetoresistive (MR) sensor element as a magnetic field probe 118. According to the present invention, terminals 126 are provided for connecting to further magnetic field sensors via the data bus 112, which terminals can be welded to a leadframe, for example. Further components, e.g. capacitors 122 or resistors, can be integrated in the magnetic field sensor 100 as required. The magnetic field probe and the further electronic components can be arranged on the same semiconductor module or on separate modules which are connected to each other.

Furthermore, the magnetic field sensor 100 is equipped with an input/output interface 114. This input/output interface 114 comprises four terminals, for example. A power supply terminal 128 can be connected to an external power supply unit. A ground terminal 130 enables connection to an external reference potential, and an output terminal 132 outputs the output signal calculated in the magnetic field sensor 100. The output signal can be a pulse width modulated (PWM) signal, for example, in the case of which the duty factor encodes the information to be output via the measured magnetic field. Alternatively, an analogue signal, for example an analogue voltage signal, or a digital signal, for example a signal according to the SENT protocol already mentioned, can also be output. The comp. output terminal 134 supplies an output signal which is complementary to the output signal (e.g. an inverted output signal).

As already mentioned with respect to Fig. 1, the magnetic field sensor 100 shown in Figure 2 can be configured to establish an array with an extended measuring range, as a master 108 and also as a slave 110. This configuration takes place purely by means of software; hardware modifications are not necessary. The terminals 126 or 114 which are not required in each case remain unconnected.

With respect to Fig. 3, a further advantageous embodiment of a displacement sensor according to the present invention is explained in greater detail hereinafter. According to this embodiment, the displacement sensor comprises a permanent magnet 102 and a magnetic field sensor arrangement 106 with a first magnetic field sensor 108 and a second magnetic field sensor 110. The first magnetic field sensor 108 and the second magnetic field sensor 110 are formed by identical components, for example Hall-effect sensors. Each of the two magnetic field sensors 108, 110 possesses five terminals: a supply terminal (Supply) and a ground terminal (GND), an output terminal (Output) and two test terminals (Test1 and Test2) which enable both input and output of signals. A three-dimensional Hall-effect sensor can for example be used as a magnetic field probe 118.

In the case of the shown embodiment, the input/output interface 114 comprises only three terminals, namely the power supply terminal 128, the ground terminal 130 and the output terminal 132. The two magnetic field sensors 108, 110 are, according to the arrangement shown in Figure 3, wired up such that the first magnetic field sensor 108 is configured as master, while the second magnetic field sensor 110 is configured as slave.

As is apparent in Figure 3, the measuring signals are transmitted from the output of the magnetic field sensor 110 via the communication bus 112, for example according to a SENT protocol, to the magnetic field sensor 108 acting as master.

The arrangement shown in Figure 3 has the advantage that the master 108 evaluates the data of the slaves 110 together with the data of its own magnetic field probe 118, and thus a doubled measuring range, in comparison with that of an individual sensor, can be achieved. Furthermore, the connections between the two magnetic field sensors 108, 110 and to the input/output interface can take the form of a leadframe. If both magnetic field sensors 108, 110 include integrated EMC/ESD protection circuits respectively then, advantageously, no PCB is required.

The master-slave arrangement shown in Figure 3 can also find a mechanical solution, as illustrated in Figure 4. Here, the two magnetic field sensors 108, 110 are arranged such that their terminals face each other.

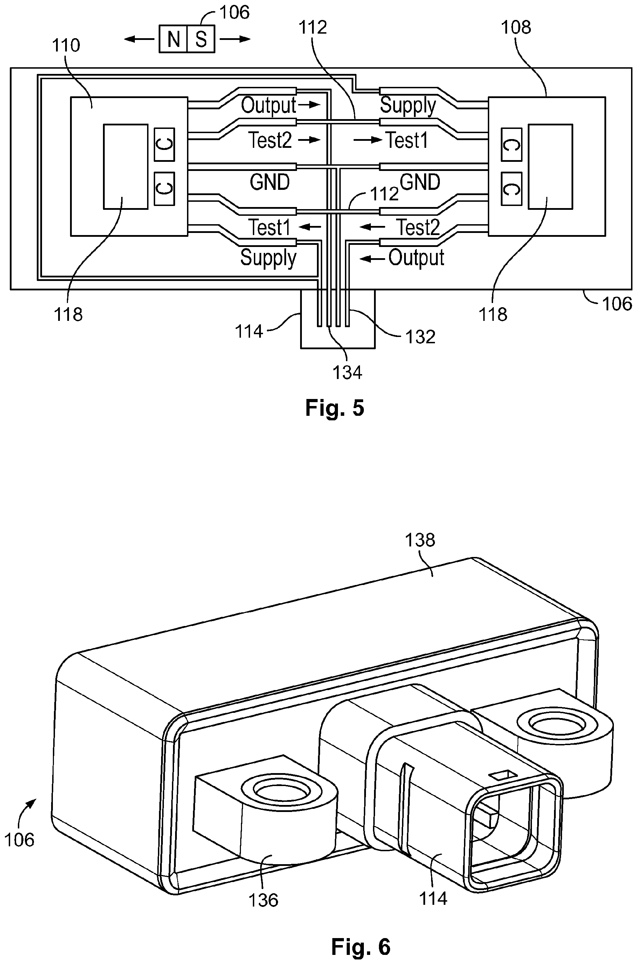

A further advantageous embodiment of the present invention is illustrated in Figure 5. In the case of this arrangement, the first magnetic field sensor 108 and the second magnetic field sensor 110 are wired up to form a multimaster architecture. In particular in the case of this arrangement, each of the two magnetic field sensors 108, 110 acts as both master and slave. As is evident in Figure 5, both magnetic field sensors 108, 110 perform a magnetic field measurement. The generated measuring signals are transmitted via the data bus lines 112 to the respectively other magnetic field sensor. Each of the two magnetic field sensors includes a calculating unit which calculates the position of the permanent magnet 102 from the combination of the two measuring signals and generates a corresponding output signal.

Here, the input/output interface 114 according to the invention is constructed such that the actual position signal is output on the output terminal 132, while the output signal which is complementary thereto is located on the complementary output 134. This embodiment has the advantage that an additional fault monitoring possibility is created by means of the obtained redundancy.

It is to be noted that Figures 1 to 5 are not to scale and in particular do not reflect the relative dimensions of the permanent magnet 102 and the individual magnetic field sensors, and the terminals and interfaces.

Figure 6 shows an example of an advantageous embodiment of the mechanical implementation of a magnetic field sensor arrangement 106 in a perspective illustration. The input/output interface 114 is here constructed as a so-called NanoMQS plug connector. Fixing means 136 enable the magnetic field sensor arrangement 106 to be fastened to a further component, for example with the help of a screw connection. The magnetic field sensor arrangement 106 is advantageously hermetically protected in an electrically insulating housing 138.

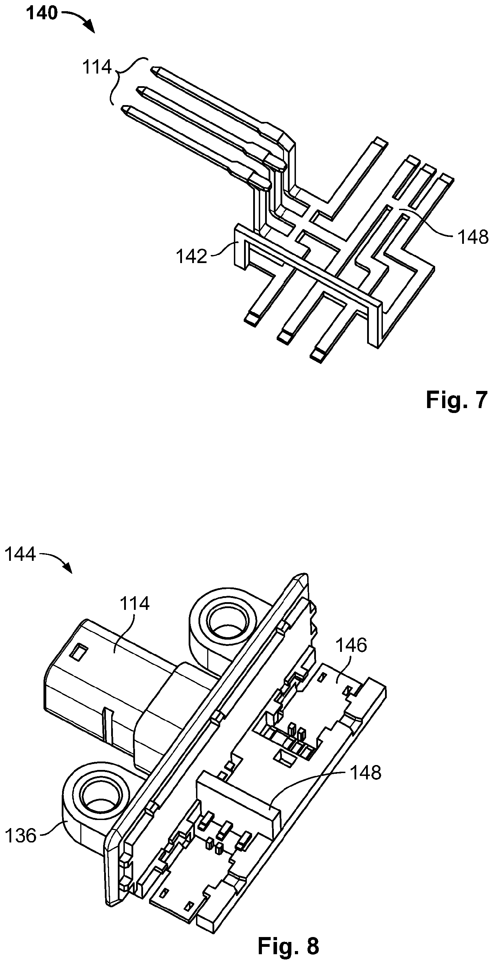

The inventive production of the magnetic field sensor arrangement 106 will be explained in detail hereinafter with reference to Figures 7 to 10.

An advantageous production method for a magnetic field sensor arrangement according to the present invention begins with the provision of a leadframe 140. This is produced from metal by stamping and bending, for example. In the shown embodiment, the leadframe has a three-dimensional shape and includes both the internal connecting lines and the terminals of the input/output interface 114 which are directed outwards. An additional reinforcing bracket 142 ensures greater mechanical stability. The conductor tracks, which are actually separate, are still connected to each other by connecting webs 148.

In a next step, the leadframe 140 has plastic injection moulded around it such that a carrier 144 is formed. This stage is shown in Figure 8. The complete plug connector for the input/output interface 114 and the fixing means 136 are already formed on the carrier 144. Receptacles 146 enable the subsequent assembly of the magnetic field sensors 100. The reinforcing bracket 142 binds a reinforcing rib 150 to the plastic material surrounding it. After the leadframe 140 is moulded in, the connecting webs 148 (see Figure 7) are removed. The individual lines of the leadframe are thus electrically and mechanically separated from each other.

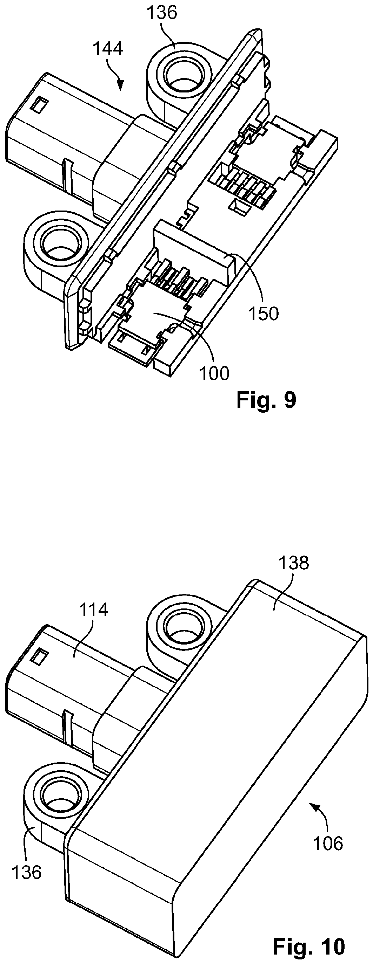

Figure 9 shows the carrier 144 after assembly of the magnetic field sensors 100. The individual contacts of the magnetic field sensors are advantageously welded to terminals of the leadframe 140, for example via laser welding. Other possibilities for the electrical connection such as soldering are of course also usable.

To conclude the production process, the sensor is hermetically sealed with the help of a cover cap 138 which forms the housing. The mechanical connection between the carrier 144 and the cover cap can take place, for example, via laser welding or ultrasonic welding. Other possibilities such as an adhesive bond are of course also usable.

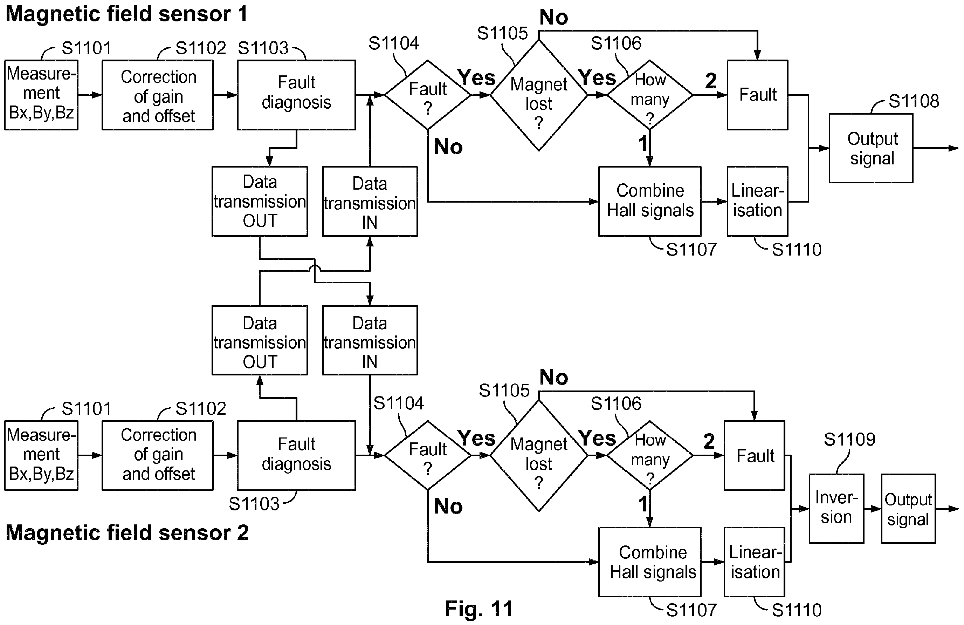

Figure 11 schematically shows, in the form of a signal flowchart, the evaluation of the sensor architecture from Figure 5 in the event that the first magnetic field sensor 108 and the second magnetic field sensor 110 each have a 3D Hall probe as a magnetic field probe 118.

In a first step (S1101), each Hall probe detects the three components Bx, By and Bz of the magnetic field which is generated by the permanent magnet 102. In the following step S1102, a correction of the gain and the offset is carried out by each of the two magnetic field sensors 108, 110. In step S1103, the generated signal is transmitted to the respectively other magnetic field sensor for a fault diagnosis, and it is determined whether or not a fault is present (S1104). If no fault is detected or if the fault is based on the fact that precisely one of the two magnetic field sensors can no longer detect the magnet (steps S1105 and S1106), the two Hall-effect signals generated in step S1102 are combined in each of the magnetic field sensors 108, 110 (step S1107) and the signal is linearised (S1110). Finally, the first magnetic field sensor 108 outputs the output signal in step S1108. By contrast, the second magnetic field sensor 110 performs an inversion of the signal (S1109) such that the complementary output signal is output by the second magnetic field sensor 110. These two redundant signals can be evaluated for fault monitoring.

The inventive combination of the signals of two Hall-effect sensors provides the advantage, as is apparent in Figure 12, that an approximately linear signal can be generated across a larger position range. In Figure 12, the curve 1201 represents the output signal of the first magnetic field sensor 108, while the curve 1202 indicates the output signal of the second magnetic field sensor 110. By combining the two signals 1201 and 1202, the overall signal 1203 is obtained. This overall signal 1203 is advantageously calculated by the sum of the two individual signals divided by 2.

## REFERENCE NUMBERS

| 100 | Magnetic field sensor |
|---|---|
| 102 | Permanent magnet |
| 104 | Travel distance |
| 106 | Magnetic field sensor arrangement |
| 108 | First magnetic field sensor (master) |
| 110, 110-1... 110-N | Second magnetic field sensor (slave) |
| 112 | Data bus |
| 114 | Input/output interface |
| 116 | Electrical lines |
| 118 | Magnetic field probe |
| 120 | ASIC |
| 122 | Capacitor |
| 124 | Unconnected terminal |
| 126 | Terminal |
| 128 | Power supply terminal |
| 130 | Ground terminal |
| 132 | Output terminal |
| 134 | Complementary output terminal |

(continued)

| 136 | Fixing means |
|-----|--------------|
| 138 | Housing |
| 140 | Leadframe |
| 142 | Reinforcing bracket |
| 144 | Carrier |
| 146 | Receptacle for magnetic field sensor |
| 148 | Connecting web |
| 150 | Reinforcing rib |

**Claims**

1. A displacement sensor comprising a magnetic field source (102), which generates a magnetic field, and a magnetic field sensor arrangement (106), for contactlessly detecting a relative position of the magnetic field source (102) and the magnetic field sensor arrangement (106) with respect to each other, wherein the magnetic field source (102) and the magnetic field sensor arrangement (106) are movable relative to each other,

   wherein the magnetic field sensor arrangement (106) comprises a first magnetic field sensor (108) for generating a first position signal and at least one second magnetic field sensor (110) for generating a second position signal; wherein each of the magnetic field sensors (108, 110) comprises at least one magnetic field probe (118) for detecting a magnetic flux density of the magnetic field, an evaluation unit for evaluating an output signal of the magnetic field probe, and a communication interface for emitting and receiving communication signals, and wherein the first and the second magnetic field sensors are connected to each other via a data bus (112) for transmitting said communication signals,
   wherein the magnetic field sensor arrangement has a housing (138) which encloses all the magnetic field sensors (108, 110),
   **characterized in that**
   the displacement sensor further comprises a carrier formed by injection moulding a plastic around a leadframe (140);
   wherein the first magnetic field sensor and the at least one second magnetic field sensor are connected to each other via said leadframe (140) such that the leadframe produces a terminal to the outside and a bidirectional data bus connection between the first and the second magnetic field sensor.

2. The displacement sensor according to Claim 1, wherein the first magnetic field sensor (108) is configured as master and the at least one second magnetic field sensor (110) is configured as slave.

3. The displacement sensor according to Claim 1 or 2, wherein a plurality of second magnetic field sensors (110-1 to 110-N) are provided which are arranged in series along a displacement path of the magnetic field source (102).

4. The displacement sensor according to Claim 1, wherein the first magnetic field sensor (108) is configured as master and precisely one second magnetic field sensor (110) is provided which is identical to the first magnetic field sensor.

5. The displacement sensor according to any one of the preceding claims, wherein the magnetic field source has a permanent magnet (102).

6. The displacement sensor according to any one of the preceding claims, wherein the magnetic field probe of the first and at least one second magnetic field sensor comprises a two-dimensional or three-dimensional Hall-effect sensor or a magnetoresistive sensor.

7. The displacement sensor according to any one of the preceding claims, wherein the first magnetic field sensor (108) has an output driver unit which can be operated to output an output signal based on the first and the at least one second position signal.

8. The displacement sensor according to Claim 4 and 7, wherein the precisely one second magnetic field sensor (110) can be operated to output a complementary output signal which is redundant in relation to said output signal.

9. A method for producing a magnetic field sensor arrangement for a displacement sensor for contactlessly detecting a relative position of a magnetic field source, which generates a magnetic field, and the magnetic field sensor arrangement with respect to each other, wherein the magnetic field source and the magnetic field sensor arrangement are movable relative to each other, wherein the method comprises the following steps:

> producing a leadframe;
> injection moulding a plastic around the leadframe to form a carrier;
> assembling a first magnetic field sensor and at least one second magnetic field sensor, wherein each of the magnetic field sensors comprises at least one magnetic field probe for detecting a magnetic flux density of the magnetic field, an evaluation unit for evaluating an output signal of the magnetic field probe, and a communication interface for emitting and receiving communication signals, such that the leadframe produces a terminal to the outside and a bidirectional data bus connection between the first and the at least one second magnetic field sensors;
> enclosing the magnetic field sensor arrangement in a housing.

10. The method according to Claim 9, wherein the first and the at least one second magnetic field sensor are formed by a housed sensor element.

11. A method for operating a displacement sensor according to any one of Claims 1 to 8, comprising the following steps:

> generating the first and at least one second position signal by means of the first and at least one second magnetic field sensor in dependence on a position of the magnetic field source with respect to the magnetic field sensor arrangement;
> transmitting the at least one second position signal via the bidirectional data bus to the first magnetic field sensor, wherein the first magnetic field sensor is configured as master;
> calculating an output signal based on the first and the at least one second position signals by means of the first magnetic field sensor;
> outputting the output signal by means of the first magnetic field sensor.

12. The method according to Claim 11, wherein a communication according to an SPI, I$^2$C or SENT protocol is performed via the bidirectional data bus.

13. The method according to Claim 11 or 12, further comprising the steps:

> calculating a complementary output signal;
> outputting the complementary output signal by means of a second magnetic field sensor.

**Patentansprüche**

1. Wegsensor, der eine Magnetfeld-Quelle (102), die ein Magnetfeld erzeugt, sowie eine Magnetfeld-Sensoranordnung (106) zum berührungslosen Erfassen einer relativen Position der Magnetfeld-Quelle (102) und der Magnetfeld-Sensoranordnung (106) zueinander umfasst, wobei die Magnetfeld-Quelle (102) und die Magnetfeld-Sensoranordnung (106) relativ zueinander bewegt werden können,

> die Magnetfeld-Sensoranordnung (106) einen ersten Magnetfeld-Sensor (108) zum Erzeugen eines ersten Positionssignals sowie wenigstens einen zweiten Magnetfeld-Sensor (110) zum Erzeugen eines zweiten Positionssignals umfasst;
> wobei jeder der Magnetfeld-Sensoren (108, 110) wenigstens eine Magnetfeld-Sonde (118) zum Erfassen einer magnetischen Flussdichte des Magnetfeldes, eine Bewertungs-Einheit zum Bewerten eines Ausgangssignals der Magnetfeld-Sonde sowie eine Kommunikations-Schnittstelle zum Senden und Empfangen von Kommunikationssignalen umfasst, und
> der erste und der zweite Magnetfeld-Sensor zum Senden der Kommunikationssignale über einen Datenbus (112) miteinander verbunden sind,
> die Magnetfeld-Sensoranordnung ein Gehäuse (138) aufweist, das alle der Magnetfeld-Sensoren (108, 110) einschließt,

**dadurch gekennzeichnet, dass**

der Wegsensor des Weiteren einen Träger umfasst, der durch Spritzgießen eines Kunststoffs um einen Leiterrahmen (140) herum ausgebildet wird;

wobei der erste Magnetfeld-Sensor und der wenigstens eine zweite Magnetfeld-Sensor über den Leiterrahmen (140) so miteinander verbunden sind, dass der Leiterrahmen einen Anschluss nach außen sowie eine bidirektionale Datenbus-Verbindung zwischen dem ersten und dem zweiten Magnetfeld-Sensor herstellt.

2. Wegsensor nach Anspruch 1, wobei der erste Magnetfeld-Sensor (108) als Master ausgeführt ist und der wenigstens eine zweite Magnetfeld-Sensor (110) als Slave ausgeführt ist.

3. Wegsensor nach Anspruch 1 oder 2, wobei eine Vielzahl zweiter Magnetfeld-Sensoren (110-1 bis 110-N) vorhanden ist, die in Reihe entlang eines Verschiebungsweges der Magnetfeld-Quelle (102) angeordnet sind.

4. Wegsensor nach Anspruch 1, wobei der erste Magnetfeld-Sensor (108) als Master ausgeführt ist und genau ein zweiter Magnetfeld-Sensor (110) vorhanden ist, der mit dem ersten Magnetfeld-Sensor identisch ist.

5. Wegsensor nach einem der vorangehenden Ansprüche, wobei die Magnetfeld-Quelle einen Permanentmagneten (102) aufweist.

6. Wegsensor nach einem der vorangehenden Ansprüche, wobei die Magnetfeld-Sonde des ersten und des zweiten Magnetfeld-Sensors einen zweidimensionalen oder dreidimensionalen Hall-Effekt-Sensor oder einen magnetoresistiven Sensor umfasst.

7. Wegsensor nach einem der vorangehenden Ansprüche, wobei der erste Magnetfeld-Sensor (108) eine Ausgangstreiber-Einheit aufweist, die so betrieben werden kann, dass sie ein auf dem ersten und dem wenigstens einen zweiten Positionssignal basierendes Ausgangssignal ausgibt.

8. Wegsensor nach Anspruch 4 und 7, wobei der genau eine zweite Magnetfeld-Sensor (110) so betrieben werden kann, dass er ein komplementäres Ausgangssignal ausgibt, das in Bezug auf das Ausgangssignal redundant ist.

9. Verfahren zum Herstellen einer Magnetfeld-Sensoranordnung für einen Wegsensor zum berührungslosen Erfassen einer relativen Position einer Magnetfeld-Quelle, die ein Magnetfeld erzeugt, und der Magnetfeld-Sensoranordnung zueinander, wobei die Magnetfeld-Quelle und die Magnetfeld-Sensoranordnung relativ zueinander bewegt werden können und das Verfahren die folgenden Schritte umfasst:

Herstellen eines Leiterrahmens;
Spritzgießen eines Kunststoffs um den Leiterrahmen herum, um einen Träger auszubilden;
Zusammenbauen eines ersten Magnetfeld-Sensors und wenigstens eines zweiten Magnetfeld-Sensors, wobei jeder der Magnetfeld-Sensoren wenigstens eine Magnetfeld-Sonde zum Erfassen einer magnetischen Flussdichte des Magnetfeldes, eine Bewertungs-Einheit zum Bewerten eines Ausgangssignals der Magnetfeld-Sonde sowie eine Kommunikations-Schnittstelle zum Senden und Empfangen von Kommunikationssignalen umfasst, so dass der Leiterrahmen einen Anschluss nach außen sowie eine bidirektionale Datenbus-Verbindung zwischen dem ersten und dem wenigstens einen zweiten Magnetfeld-Sensor herstellt;
Einschließen der Magnetfeld-Sensoranordnung in einem Gehäuse.

10. Verfahren nach Anspruch 9, wobei der erste und der wenigstens eine zweite Magnetfeld-Sensor durch ein eingehaustes Sensorelement gebildet werden.

11. Verfahren zum Betreiben eines Wegsensors nach einem der Ansprüche 1 bis 8, umfassend die folgenden Schritte:

Erzeugen des ersten und wenigstens einen zweiten Positionssignals mittels des ersten und des wenigstens einen zweiten Magnetfeld-Sensors in Abhängigkeit von einer Position der Magnetfeld-Quelle in Bezug auf die Magnetfeld-Sensoranordnung;
Senden des wenigstens einen zweiten Positionssignals über den bidirektionalen Datenbus zu dem ersten Magnetfeld-Sensor, wobei der erste Magnetfeld-Sensor als Master ausgeführt ist;
Berechnen eines Ausgangssignals auf Basis des ersten und des wenigstens einen zweiten Positionssignals mittels des ersten Magnetfeld-Sensors;

Ausgeben des Ausgangssignals mittels des ersten Magnetfeld-Sensors.

12. Verfahren nach Anspruch 11, wobei eine Kommunikation gemäß einem SPI-, I$^2$C- oder SENT-Protokolls über den bidirektionalen Datenbus durchgeführt wird.

13. Verfahren nach Anspruch 11 oder 12, das des Weiteren die folgenden Schritte umfasst:

Berechnen eines komplementären Ausgangssignals;
Ausgeben des komplementären Ausgangssignals mittels eines zweiten Magnetfeld-Sensors.

**Revendications**

1. Capteur de déplacement comprenant une source de champ magnétique (102), qui génère un champ magnétique, et un agencement de capteurs de champ magnétique (106), pour détecter sans contact une position relative de la source de champ magnétique (102) et de l'agencement de capteurs de champ magnétique (106) l'un par rapport à l'autre, dans lequel la source de champ magnétique (102) et l'agencement de capteurs de champ magnétique (106) sont mobiles l'un par rapport à l'autre,

dans lequel l'agencement de capteurs de champ magnétique (106) comprend un premier capteur de champ magnétique (108) pour générer un premier signal de position et au moins un second capteur de champ magnétique (110) pour générer un second signal de position ;
dans lequel chacun des capteurs de champ magnétique (108, 110) comprend au moins une sonde de champ magnétique (118) pour détecter une densité de flux magnétique du champ magnétique, une unité d'évaluation pour évaluer un signal de sortie de la sonde de champ magnétique, et une interface de communication pour émettre et recevoir des signaux de communication, et
dans lequel les premier et second capteurs de champ magnétique sont connectés l'un à l'autre par un bus de données (112) pour transmettre lesdits signaux de communication,
dans lequel l'agencement de capteurs de champ magnétique a un boîtier (138) qui renferme tous les capteurs de champ magnétique (108, 110),
**caractérisé en ce que** le capteur de déplacement comprend en outre un support formé par moulage par injection d'une matière plastique autour d'une grille de connexion (140) ;
dans lequel le premier capteur de champ magnétique et le au moins un second capteur de champ magnétique sont connectés l'un à l'autre par l'intermédiaire de ladite grille de connexion (140) de sorte que la grille de connexion produit une borne vers l'extérieur et une connexion de bus de données bidirectionnelle entre le premier et le second capteur de champ magnétique.

2. Capteur de déplacement selon la revendication 1, dans lequel le premier capteur de champ magnétique (108) est configuré en maître et le au moins un second capteur de champ magnétique (110) est configuré en esclave.

3. Capteur de déplacement selon la revendication 1 ou 2, dans lequel il est prévu une pluralité de seconds capteurs de champ magnétique (110-1 à 110-N) qui sont disposés en série le long d'un trajet de déplacement de la source de champ magnétique (102).

4. Capteur de déplacement selon la revendication 1, dans lequel le premier capteur de champ magnétique (108) est configuré comme maître et il est prévu précisément un second capteur de champ magnétique (110) qui est identique au premier capteur de champ magnétique.

5. Capteur de déplacement selon l'une quelconque des revendications précédentes, dans lequel la source de champ magnétique comporte un aimant permanent (102).

6. Capteur de déplacement selon l'une quelconque des revendications précédentes, dans lequel la sonde de champ magnétique du premier et d'au moins un second capteur de champ magnétique comprend un capteur à effet Hall bidimensionnel ou tridimensionnel ou un capteur magnétorésistif.

7. Capteur de déplacement selon l'une quelconque des revendications précédentes, dans lequel le premier capteur de champ magnétique (108) comporte une unité de commande de sortie qui peut être actionnée pour délivrer un signal de sortie sur la base du premier et de l'au moins un second signal de position.

**8.** Capteur de déplacement selon les revendications 4 et 7, dans lequel, précisément le second capteur de champ magnétique (110) peut être utilisé pour délivrer un signal de sortie complémentaire qui est redondant par rapport audit signal de sortie.

**9.** Procédé de fabrication d'un agencement de capteurs de champ magnétique pour un capteur de déplacement destiné à détecter sans contact une position relative d'une source de champ magnétique, qui génère un champ magnétique, et de l'agencement de capteurs de champ magnétique l'un par rapport à l'autre, dans lequel la source de champ magnétique et l'agencement de capteurs de champ magnétique sont mobiles l'un par rapport à l'autre, le procédé comprenant les étapes suivantes :

la production d'une grille de connexion ;
le moulage par injection d'une matière plastique autour de la grille de connexion pour former un support ;
l'assemblage d'un premier capteur de champ magnétique et d'au moins un second capteur de champ magnétique, dans lequel chacun des capteurs de champ magnétique comprend au moins une sonde de champ magnétique pour détecter une densité de flux magnétique du champ magnétique, une unité d'évaluation pour évaluer un signal de sortie de la sonde de champ magnétique, et une interface de communication pour émettre et recevoir des signaux de communication, de sorte que la grille de connexion produit une borne vers l'extérieur et une connexion de bus de données bidirectionnelle entre le premier et le au moins un second capteur de champ magnétique ;
l'enfermement de l'agencement de capteurs de champ magnétique dans un boîtier.

**10.** Procédé selon la revendication 9, dans lequel le premier et l'au moins un second capteur de champ magnétique sont formés par un élément capteur logé.

**11.** Procédé de fonctionnement d'un capteur de déplacement selon l'une quelconque des revendications 1 à 8, comprenant les étapes suivantes :

la génération du premier et au moins d'un second signal de position au moyen du premier et au moins d'un second capteur de champ magnétique en fonction d'une position de la source de champ magnétique par rapport à l'agencement de capteurs de champ magnétique ;
la transmission du au moins un second signal de position *via* le bus de données bidirectionnel au premier capteur de champ magnétique, dans lequel le premier capteur de champ magnétique est configuré comme maître ;
le calcul d'un signal de sortie basé sur le premier et l'au moins un second signal de position au moyen du premier capteur de champ magnétique ;
la sortie du signal de sortie au moyen du premier capteur de champ magnétique.

**12.** Procédé selon la revendication 11, dans lequel une communication selon un protocole SPI, I$^2$C ou SENT est effectuée *via* le bus de données bidirectionnel.

**13.** Procédé selon la revendication 11 ou 12, comprenant en outre les étapes :

de calcul d'un signal de sortie complémentaire ;
la sortie du signal de sortie complémentaire au moyen d'un second capteur de champ magnétique.

102

N S

108    110  118  120                    106

112

110-1

116    122

114

**Fig. 1**

112                    112

126

ASIC

MR

118            120

122

GND    Comp. Output    PWM/SENT/Analog    Power

100

130    134    132    128

114

**Fig. 2**

**Fig. 3**

**Fig. 4**

**Fig. 5**

**Fig. 6**

**140**

114

142

148

**Fig. 7**

144

114

146

136

148

**Fig. 8**

136

144

150

100

**Fig. 9**

138

114

136

106

**Fig. 10**

**Magnetic field sensor 1**

Fig. 11

EP 3 578 927 B1

Output signals

1201    1203

Position
10 mm/DIV

1202

**Fig. 12**

|B|    By

α

Bz    100

d

102    N | S    z [mm]

104

**Fig. 13**

**Fig. 14**

**Fig. 15**

**Fig. 16**

**Fig. 17**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2466269 A2
- US 2014297911 A1
- DE 102013009862 A1

- WO 03019216 A1
- US 2013335073 A1
- DE 102012205903 B4